(19) **Europäisches Patentamt**

**European Patent Office**

**Office européen des brevets**

(11) Numéro de publication : **0 301 941 B1**

(12) **FASCICULE DE BREVET EUROPEEN**

(45) Date de publication du fascicule du brevet :
**12.02.92 Bulletin 92/07**

(51) Int. Cl.⁵ : **G09B 9/00,** G01S 7/40

(21) Numéro de dépôt : **88401863.1**

(22) Date de dépôt : **19.07.88**

(54) Dispositif de positionnement d'une maquette dans l'espace, notamment pour l'étude de la rétrodiffusion de cette maquette.

(30) Priorité : **31.07.87 FR 8710921**

(43) Date de publication de la demande :
**01.02.89 Bulletin 89/05**

(45) Mention de la délivrance du brevet :
**12.02.92 Bulletin 92/07**

(84) Etats contractants désignés :
**BE CH DE ES GB IT LI LU NL SE**

(56) Documents cités :
**DE-A- 2 929 814**
**US-A- 4 621 265**
**IEEE TRANSACTIONS ON GEOSCIENCE AND REMOTE SENSING, vol. GE-22, no. 2, mars 1984, pages 165-169, IEEE, New York, US; D.R. BRUNFELDT et al.: "Active reflector for radar calibration"**

(73) Titulaire : **ELECTRONIQUE SERGE DASSAULT**
**55, quai Marcel Dassault**
**F-92214 Saint-Cloud (FR)**

(72) Inventeur : **Balet, Daniel**
**7, avenue Mirabeau**
**F-78600 Maisons-Lafitte (FR)**
Inventeur : **Chiomento, Renzo**
**Résidence de la Source No. 5 Issou**
**F-78440 Gargenville (FR)**
Inventeur : **Beaulieu, Louis**
**4, rue Louise Michel**
**F-78280 Guyancourt (FR)**
Inventeur : **Poncel, Yves**
**21bis, chemin du Bois-des-Ormes**
**F-78160 Marle-le-Roi (FR)**

(74) Mandataire : **Plaçais, Jean-Yves et al**
**Cabinet Netter, 40, rue Vignon**
**F-75009 Paris (FR)**

EP 0 301 941 B1

Jouve, 18, rue Saint-Denis, 75001 PARIS

## Description

L'invention concerne un dispositif de positionnement d'une maquette dans l'espace, notamment pour l'étude de la rétrodiffusion de cette maquette, en particulier en hyperfréquences.

De telles études peuvent être conduites à l'air libre, ou bien en chambre sourde (aux hyperfréquences). L'invention s'applique surtout au second cas.

L'émetteur/récepteur hyperfréquence, fixe et orienté vers la maquette, doit mesurer avec précision ses caractéristiques de rétrodiffusion. L'emplacement où se trouve la maquette est en principe fixe, mais il faut pouvoir faire varier l'altitude de celle-ci vis-à-vis de l'axe d'illumination en hyperfréquence. Par ailleurs, selon son échelle, la masse d'une maquette peut atteindre plusieurs centaines de kilogrammes.

Une difficulté réside alors en ce que le support ou (positionneur) de la maquette doit lui-même avoir une faible rétrodiffusion en hyperfréquence, en bref une faible surface équivalente radar.

Il faut aussi connaître exactement l'attitude et la position dans l'espace de la maquette, en correspondance de chaque mesure hyperfréquence. Au sens de la présente invention, une mesure hyperfréquence est constituée du jeu complet d'informations que peut acquérir l'émetteur/récepteur. Sa durée est liée par exemple au facteur de forme, produit de la durée d'impulsion par la fréquence de récurrence, s'agissant d'un radar Doppler à impulsion. Au sens de la présente invention, l'attitude est prise dans son sens le plus large (roulis, tangage, gisement).

Jusqu'à présent, on a utilisé des supports de maquette tels qu'un mât ou un bloc de mousse, associés à des moyens de positionnement convenables.

Par ailleurs, la position et l'attitude de la maquette étaient déterminées en effectuant une recopie mécanique ou optique de l'attitude des supports.

Il devient maintenant souhaitable de travailler sur des maquettes faiblement et très faiblement rétrodiffusantes, ce que les dispositifs connus ne peuvent faire correctement.

La présente invention a pour but de fournir des moyens de positionnement d'une maquette qui, en eux-mêmes, possèdent une très faible surface équivalente radar (SER).

Elle a également pour but que cette SER demeure très faible, quelle que soit l'attitude de la maquette, celle-ci pouvant être modifiée de façon continue, en particulier en gisement.

L'invention a aussi pour but de permettre une mesure précise de l'attitude de la maquette, en particulier sa rotation en gisement, sans nécessiter l'apposition de marques, celles-ci pouvant altérer la rétrodiffusion d'une maquette à très faible SER, et sans nécessiter de dispositifs de recopie de l'attitude des supports.

L'invention a encore pour but d'assurer la stabilité d'attitude de la maquette pendant les mesures hyperfréquence, tel que défini plus haut.

L'invention a donc pour objet un dispositif de positionnement d'une maquette en vue de mesures de rétrodiffusion, en particulier en hyperfréquences, comprenant des moyens de support, propres à tenir la maquette dans une position commandée, variable au moins en attitude, par rapport à un axe d'illumination, en principe horizontal, caractérisé en ce que ces moyens de support comprennent :

a) un support supérieur et un support inférieur mobiles indépendamment dans deux plans fixes espacés respectifs, en rotation commandée, autour d'un même axe sensiblement vertical, passant sensiblement au milieu de chacun de ces supports,

b) deux paires de fils supérieurs, dont un bout est lié à demeure à la maquette, dans une zone de liaison de la partie supérieure de la maquette,

c) deux paires de fils inférieurs, dont un bout est lié à demeure à la maquette dans une zone de liaison de la partie inférieure de la maquette,

ces deux paires de fils supérieurs étant montées, à leur autre bout, sur des moyens de tension respectivement fixés aux deux extrémités du support supérieur, et destinées à régler la tension et la longueur des fils en fonction d'une altitude désirée et/ou d'une attitude désirée pour la maquette,

ces deux paires de fils inférieurs étant montées, à leur autre bout, sur des moyens de tension respectivement fixés aux deux extrémités du bras inférieur, et destinées à régler la tension et la longueur des fils en fonction d'une altitude désirée et/ou d'une attitude désirée pour la maquette, et

d) des moyens de commande de la position angulaire des deux bras en fonction d'une altitude désirée et/ou d'une attitude désirée pour la maquette.

Avantageusement, les moyens de commande et les moyens de tension sont agencés de sorte que l'angle de chacun des fils avec la direction d'illumination demeure inférieur à un seuil choisi, plus petit que 90°, de préférence environ 60°.

L'angle de chacun des fils avec la verticale est avantageusement d'environ 45°.

Les zones de liaison peuvent être situées sensiblement dans un même plan vertical passant par le centre de gravité de la maquette.

Dans un mode préféré de réalisation, les zones de liaison comprennent de fins alésages et les bouts des fils supérieurs (respectivement inférieurs), liés à la maquette, pénètrent par ces fins alésages dans la partie supérieure (respectivement inférieure) de la maquette et sont fixés à demeure à l'intérieur de celle-ci.

Les fils sont avantageusement réalisés en une matière de raideur élevée, en particulier une fibre polyamide aromatique telle que le Kevlar (marque déposée).

Le support supérieur est, de préférence, constitué de deux paires de bras supérieurs situées de part et d'autre des moyens de commande, et le support inférieur est constitué, de préférence, de deux paires de bras inférieurs situées de part et d'autre des moyens de commande.

Les moyens de tension d'un fil sont constitués avantageusement, d'une part, de moyens de réserve dudit fil, d'autre part, d'un système de commande de ces moyens de réserve permettant, d'une part, de régler la longueur du fil en fonction de la position commandée de la maquette, d'autre part, d'assurer toujours une tension dans le fil.

Les moyens de réserve et le système de commande peuvent être montés sur un châssis fixé de façon amovible à l'extrémité de chaque support supérieur et inférieur; les moyens de réserve sont avantageusement constitués d'une bobine solidaire d'un axe de rotation lié au châssis, autour de laquelle est bobiné le fil et située dans une zone proche de l'extrémité du châssis la plus proche de l'axe vertical de rotation du support correspondant;

le système de commande est de préférence constitué, en premier lieu, d'une première poulie à gorge, commandée en rotation par un moteur pas à pas autour d'un axe de pivotement lié au châssis et montée dans un boîtier susceptible de pivoter autour dudit axe de pivotement, en deuxième lieu, d'une seconde poulie à gorge, liée au boîtier du côté de l'axe de pivotement le plus éloigné de la bobine, commandée en rotation par la première poulie à gorge, de sorte que sa rotation soit égale en valeur mais opposée en sens à celle de la première poulie à gorge, ledit fil quittant la bobine et étant enroulé successivement sur la première puis la seconde poulie à gorge de façon à former des huit, avant de quitter le boîtier par une ouverture, en troisième lieu, d'une poulie de commande de la bobine, montée sur l'axe de rotation de la bobine de façon à communiquer à cette dernière une vitesse de rotation variable, en quatrième lieu, une courroie de transmission reliant la première poulie à gorge et la poulie de commande et communiquant à la poulie de commande la vitesse de rotation déterminée.

Dans un mode préféré de réalisation, la poulie de commande est une poulie à friction et le boîtier est de préférence muni d'un capteur de force, notamment à mesure par cisaillement, également lié au châssis et permettant de mesurer la tension du fil; ce boîtier pouvant être muni d'un dispositif d'amortissement, notamment des manchons en caoutchouc, situés sur l'axe de pivotement.

Le système de commande peut comporter en outre un galet presseur, situé dans le boîtier à proximité de la seconde poulie à gorge, de façon à venir en contact avec la partie du fil qui quitte la seconde poulie à gorge en direction de la maquette.

Avantageusement, sont en outre prévues deux caméras, solidaires de l'un des supports, et orientées vers la maquette, ainsi que des moyens de traitement reliés à ces caméras, pour mesurer le décalage en gisement de la maquette et son déport par rapport à sa position de repos.

Le dispositif selon l'invention peut également comporter au moins une autre caméra, fixe, visant la maquette dans un plan équatorial, permettant aux moyens de traitement de mesurer au moins le tangage de celle-ci.

Les moyens de traitement réalisent avantageusement une interpolation sur la position et l'attitude de la maquette.

D'autres caractéristiques et avantages de l'invention apparaîtront à l'examen de la description détaillée ci-après, et des dessins annexés, sur lesquels :

– la figure 1 est une vue schématique d'un mode de réalisation d'un dispositif de positionnement selon l'invention, présentant une géométrie correspondant à une position de mesure de la maquette telle que l'angle C décrit par l'axe longitudinal de la maquette à partir de l'axe d'illumination est compris entre -45° environ et 45° environ ou entre 135° environ et 225° environ,

– la figure 2 est une vue schématique du dispositif de positionnement présentant une géométrie correspondant à une position de mesure de la maquette telle que l'angle C décrit par l'axe longitudinal de la maquette à partir de l'axe d'illumination est compris entre 45° environ et 135° environ ou entre 225° environ et 315° environ,

– la figure 3 est une coupe longitudinale du dispositif de positionnement selon l'invention, la géométrie du dispositif correspondant à un angle C égal à 0°,

– la figure 4 est une vue de dessus partielle du dispositif de positionnement représenté sur la figure 3, montrant en trait gras le support supérieur correspondant à la géométrie de la figure 1, et en trait fin le support supérieur correspondant à une géométrie de la figure 2,

– la figure 5 est une vue en perspective d'un des moyens de tension des fils supportant la maquette,

– la figure 6 est une vue de dessus avec partie arrachée du moyen de tension de la figure 5,

– la figure 7 est la coupe selon la ligne VII-VII de la figure 6, et

– la figure 8 est la coupe selon la ligne VIII-VIII de la figure 7.

Les dessins annexés apportent pour l'essentiel des informations de caractère certain. En conséquence, ils pourront servir non seulement à mieux faire comprendre la description détaillée ci-après, mais aussi pour contribuer à la définition de l'invention, le cas échéant.

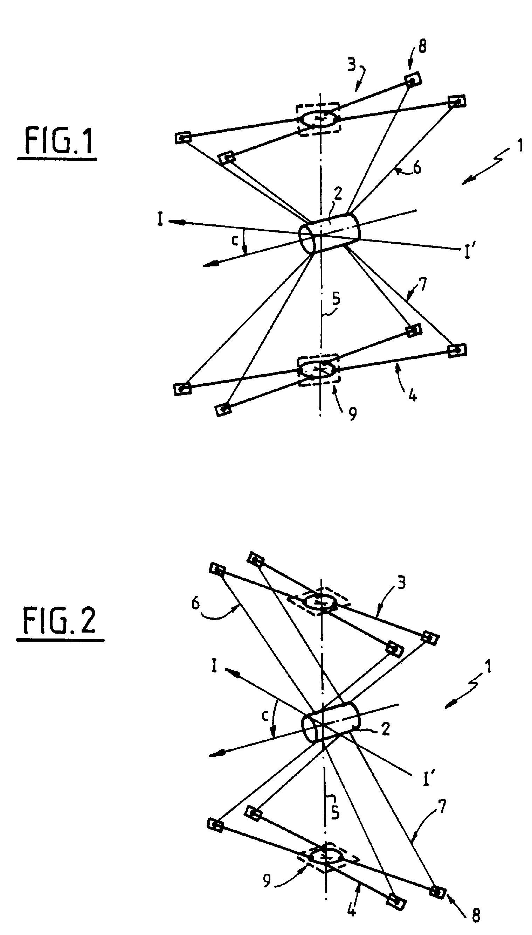

Si l'on se réfère aux figures 1 et 2, on voit que l'on a désigné par 1 dans son ensemble un dispositif de positionnement d'une maquette 2. Cette maquette 2 est positionnée en vue de mesures de rétro-diffusion, en particulier en hyperfréquence. Une fois la maquette 2 positionnée, son axe longitudinal décrit un angle C avec l'axe d'illumination radio-électrique en principe horizontal I-I′.

Ce dispositif de positionnement 1 comprend des moyens de support propres à tenir cette maquette 2 dans la position de mesure désirée par rapport à l'axe d'illumination I-I′. Ces moyens de support comprennent un support supérieur 3 et un support inférieur 4, mobiles indépendamment dans deux plans fixes espacés respectifs en rotation commandée, autour d'un même axe vertical 5, passant sensiblement au milieu de chacun de ces supports 3,4. Les moyens de support comprennent également deux paires de fils supérieurs 6 (respectivement inférieurs 7), dont un bout pénètre par de fins alésages dans la partie supérieure (respectivement inférieure) de la maquette 2, et est fixé à demeure à l'intérieur de celle-ci à l'aide d'un noeud. Ce mode de fixation est préférentiel mais on pourrait envisager tout autre dispositif de fixation approprié, tel que le collage sur la maquette, dans des zones de liaison supérieures ou inférieures. Les deux paires de fils supérieurs 6 et inférieurs 7 sont montées à leur autre bout, sur des moyens de tension 8 respectivement fixés aux deux extrémités du support supérieur 3 et du support inférieur 4. Les moyens de support comprennent enfin des moyens de commande 9 de la position angulaire des deux supports supérieur 3 et inférieur 4 en fonction d'une position désirée (altitude et/ou attitude) pour la maquette 2.

En fonction de la valeur de l'angle C, le dispositif de positionnement adopte une géométrie du type de celle représentée sur la figure 1, (c'est-à-dire l'axe longitudinal des supports ayant un angle faible par rapport à l'axe longitudinal de la maquette), ou une géométrie du type de celle représentée par la figure 2, (c'est-à-dire l'axe longitudinal des supports étant décalé de 90° par rapport au cas de la figure 1), ceci pour éviter la rétro-diffusion néfaste des fils 6 et 7. En effet, la Demanderesse a montré, lors d'expérimentations, que l'angle δ, entre l'axe d'illumination I-I′ et chacun des fils 6,7 doit demeurer inférieur à un seuil choisi plus petite que 90°, le seuil choisi pour obtenir la meilleure précision sur les mesures de SER étant d'environ 60°. Or, cet angle δ est fonction de l'angle C. La géométrie du dispositif est donc par conséquent fonction de ce même angle C.

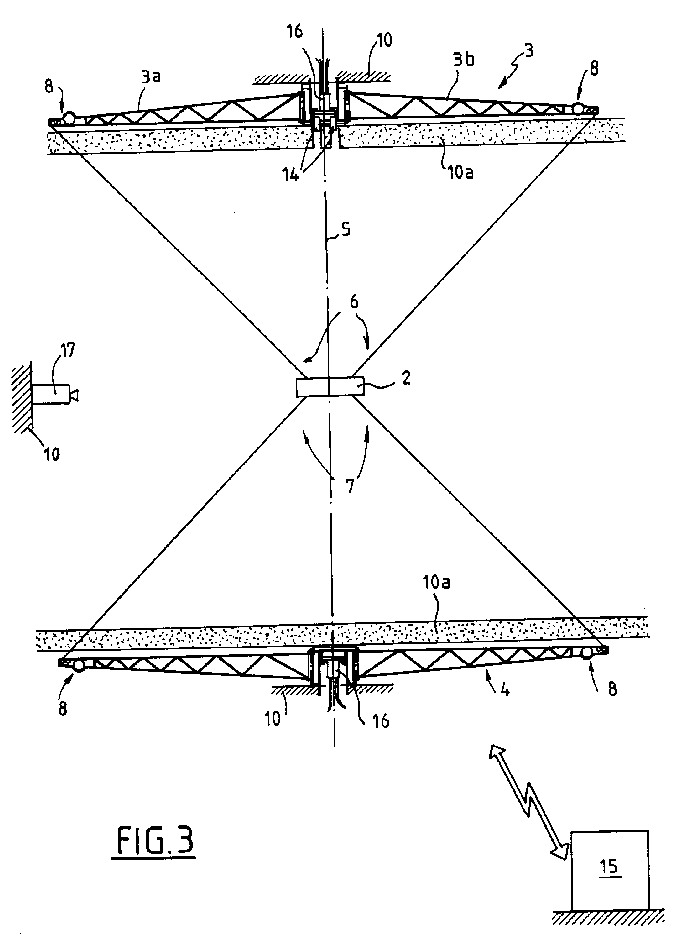

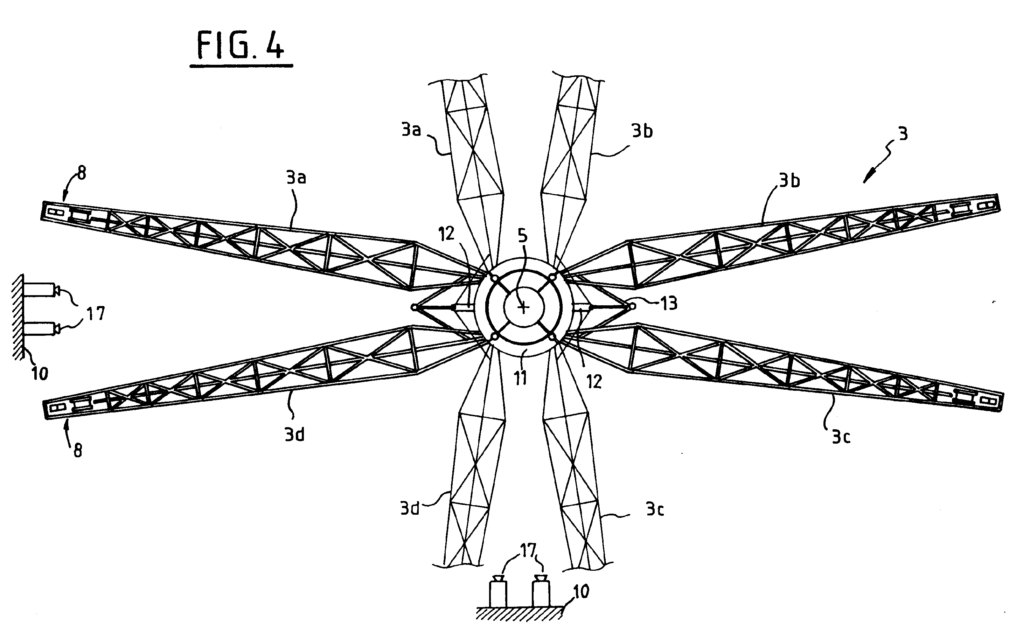

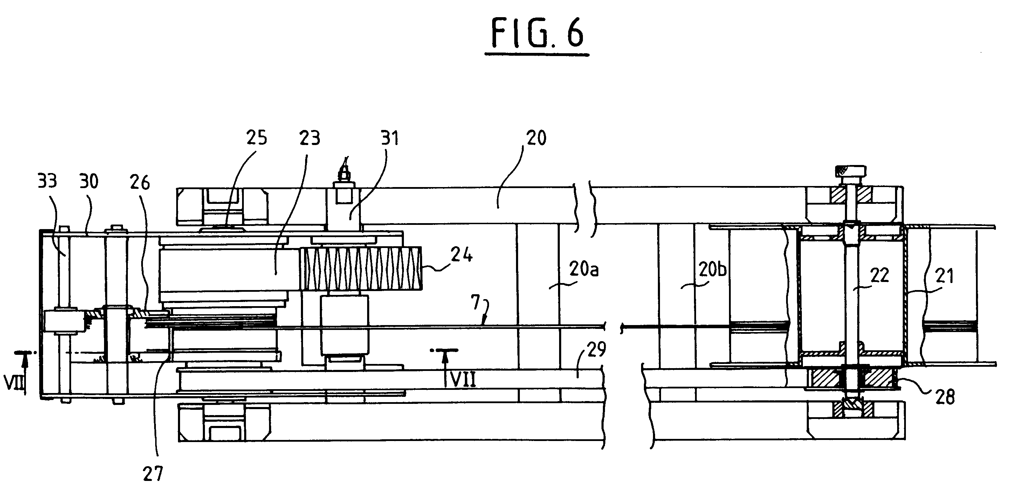

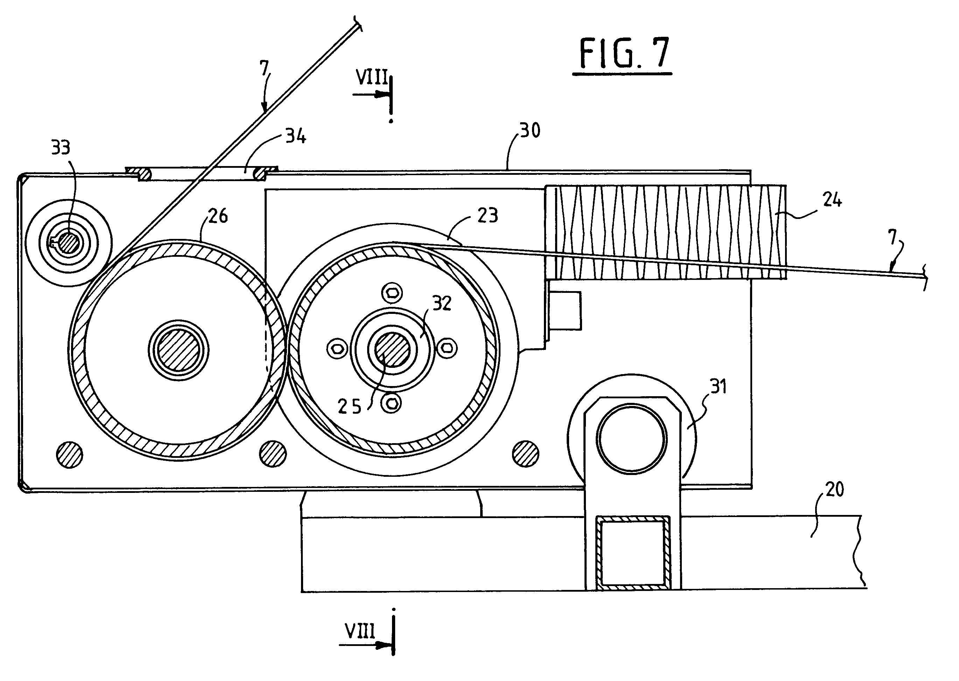

Si l'on se réfère aux figures 3 à 8, on voit que l'on a représenté de façon plus détaillée le dispositif de positionnement 1. Le dispositif 1 est placé dans une chambre anéchoide 10 dont les parois sont recouvertes d'éléments absorbants. Le dispositif pourrait également être placé dans une chambre échoide. Le support supérieur 3 est fixé au plafond de cette chambre et le support inférieur 4 est fixé sur le sol de cette dernière. Ces supports sont également recouverts sur leur face tournée vers la maquette 2 d'une couche d'éléments absorbants 10a.

Le support supérieur 3 est constitué de quatre bras supérieurs identiques 3a, 3b, 3c, 3d, montés chacun à rotation autour d'un axe vertical à la périphérie d'un plateau circulaire 11 dont l'axe est confondu avec l'axe de rotation 5 du dispositif, les axes de chaque bras supérieur étant équidistants l'un de l'autre et situés symétriquement par rapport à un plan vertical passant par l'axe de rotation 5. Ce plateau est mû en rotation par un moteur non représenté sur ces figures. Ce plateau 11 comporte également à sa périphérie, de façon diamétralement opposée, et dans le plan de symétrie des axes des quatre bras supérieurs, deux vérins de commande 12 de ces bras supérieurs 3a à 3d. La tige de chaque vérin 12 est reliée respectivement par deux barres de liaison 13 à deux bras adjacents situés de part et d'autre du plan de symétrie. L'action du vérin sur ces barres de liaison 13 fait passer les bras 3a à 3d d'une géométrie du type de celle de la figure 1 à une géométrie du type de celle de la figure 2.

Un dispositif identique est prévu sur le support inférieur 4 muni de quatre bras inférieurs identiques. Les deux plateaux 11 ainsi que les vérins de commande 12 des bras et les barres de liaison 13 constituent les moyens de commande 9 de la position angulaire des deux supports 3 et 4 du dispositif de positionnement 1. L'angle de rotation des plateaux peut être mesuré à mieux que 1/100° au moyen d'un codeur incrémental.

Les fils supérieurs 6 et inférieurs 7 sont constitués d'une matière de raideur élevée, en particulier une fibre de polyamide aromatique telle que le Kevlar (marque déposée). Les alésages de la maquette dans lesquels sont fixés à demeure, à l'aide d'un noeud, les fils supérieurs 6 et inférieurs 7 sont situés sensiblement dans un même plan vertical passant par le centre de gravité de la maquette 2. Tout autre dispositif de fixation approprié serait tel que les zones de liaison soient situées sensiblement dans un même plan vertical. Les fils ont un diamètre de l'ordre de 7/10 mm, et les alésages ont un diamètre de l'ordre de 8/10 mm, ce qui n'est pas gênant radio-électriquement tant que la longueur d'onde est dix à quinze fois plus grande que cette valeur. En dessous de cette valeur, les alésages vont créer des points brillants sur la maquette mais ceux-ci sont facilement identifiables et éliminables par traitement.

Les dimensions d'un tel dispositif sont importantes. En effet, on a une hauteur de l'ordre de 12 m entre le support inférieur 4 et le support supérieur 3. Chaque support a une longueur voisine de 10 m. Lorsque la maquette est dans une position de mesure à environ 6 m de hauteur, les fils sont inclinés de 45° environ par rapport à la verticale. La dimension classique d'une maquette peut atteindre 3 m. On peut également envisager des dispositifs ayant une hauteur plus petite, de l'ordre de 8 m par exemple.

Les fils sont montés sur des moyens de tension 8 identiques respectivement fixés aux extrémités des bras supérieurs et inférieurs. Ces moyens de tension sont destinés à régler la tension et la longueur des fils en fonction d'une position désirée pour la maquette (altitude et/ou attitude).

Afin de contrôler la position de la maquette 2 dans l'espace, le dispositif de positionnement comporte également un système de visualisation. Ce système de visualisation comporte deux caméras 14 solidaires du plateau 11 relié au support supérieur 3. Ces caméras 14 sont disposées à 180° l'une de l'autre et visent deux repères fixes, diamétralement opposés sur la maquette par rapport à son centre de gravité. Elles mesurent le décalage relatif en gisement de la maquette par rapport à sa position au repos. L'objectif des caméras est choisi pour permettre une lecture meilleure que 1/3 milliradian. Les informations, provenant des caméras 14, des moyens de tension 8 et des codeurs incrémentaux des plateaux 11 sont transmises à des moyens de traitement 15 par un collecteur à bague tournante 16 fixé dans l'axe de chacun des plateaux 11.

Le système de visualisation comporte également deux paires de caméras 17 situées dans le plan équatorial de la chambre 10 et installées sur deux parois adjacentes de celle-ci. Ces quatre caméras 17 visent la maquette 2 et enregistrent les éventuelles variations d'attitude et d'altitude de la maquette par rapport à la position au repos. Toutes ces informations sont également transmises aux moyens de traitement 15. Pour des raisons de commodités de dessins, la distance des caméras 17 par rapport à l'axe 5 est différente de la réalité.

Les moyens de traitement 15 comprennent un module de traitement des caméras 14 et 17, qui pilote ces dernières et assure leur synchronisation, un calculateur central couplé au module de traitement, et enfin un moniteur de visualisation permettent la vérification visuelle du bon fonctionnement du dispositif de positionnement.

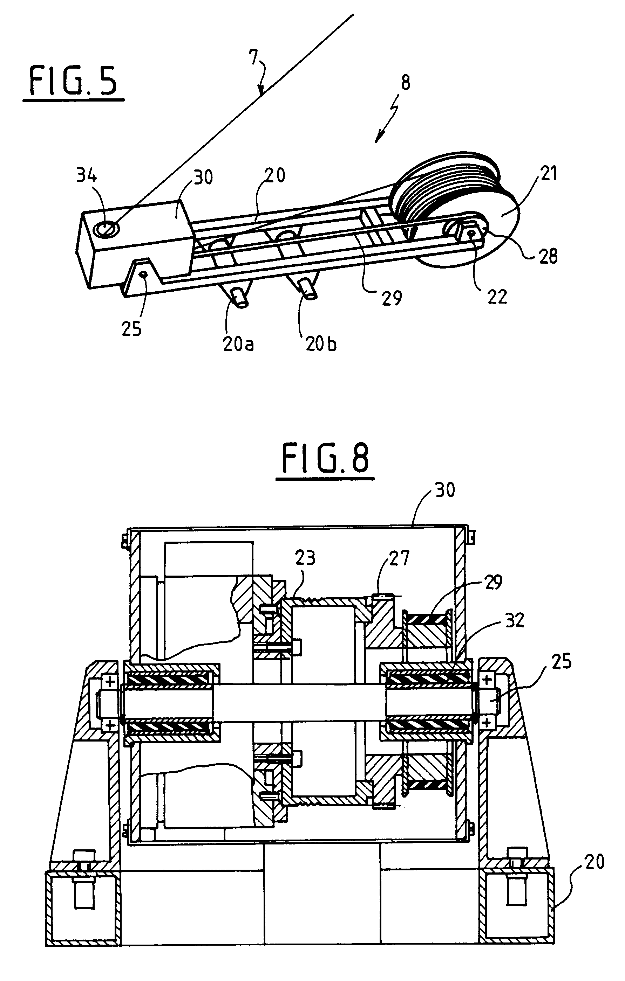

Si l'on se réfère maintenant plus particulièrement aux figures 5 à 8, on voit que l'on a représenté de façon plus détaillée un des moyens de tension 8 fixés à une extrémité d'un support, par exemple celui fixé à l'extrémité d'un support inférieur.

Ces moyens de tension 8 du fil 7 sont constitués, d'une part, de moyens de réserve de ce fil, d'autre part, d'un système de commande de ces moyens de réserve permettant, d'une part, de régler la longueur du fil 7 en fonction de la position commandée de la maquette 2, d'autre part, d'assurer toujours une tension dans le fil 7.

Les moyens de réserve et le système de commande sont montés sur un châssis 20 fixé de façon amovible à l'extrémité du bras correspondant à l'aide de deux broches à démontage rapide 20a et 20b. Ce mode de fixation permet un remplacement rapide de ces moyens de tension en cas de panne. Les moyens de réserve sont constitués d'une bobine 21 solidaire d'un axe de rotation 22 lié au châssis 20, bobine autour de laquelle est bobiné le fil 7. Cette bobine est située dans une zone proche de l'extrémité du châssis la plus proche du plateau 11 du bras correspondant, et peut contenir jusqu'à 1000 m de fil environ.

Le système de commande est constitué, en premier lieu, d'une première poulie à gorge 23, commandée en rotation par un moteur pas à pas 24 autour d'un axe de pivotement 25 lié au châssis 20. Le moteur 24 assure une rotation irréversible de la première poulie à gorge 23, c'est-à-dire que cette dernière ne pourra tourner en sens inverse lors de l'arrêt du moteur. De plus, un codeur incrémental indique la position angulaire au 1/100 de degré, donc compte tenu des dimensions du moyen de tension, la longueur déroulée du câble à mieux que 0,02 mm.

La première poulie à gorge 23 est montée dans un boîtier 30 susceptible de pivoter autour de l'axe de pivotement 15. Le système de commande comprend, en deuxième lieu, une seconde poulie à gorge 26, liée au boîtier 30 du côté de l'axe de pivotement 25 le plus éloigné de la bobine 21. Cette seconde poulie à gorge 26 est commandée en rotation par la première poulie à gorge 23 par un système d'engrenage 27, de sorte que sa rotation soit égale en valeur mais opposée en sens à celle de la première poulie à gorge 23. Le fil 7 quitte la bobine 21 et est enroulé successivement sur la première 23 puis la seconde poulie à gorge 26 de façon à former des huit.

Le système de commande comporte, en troisième lieu, une poulie de commande 28 de la bobine 21. Cette poulie de commande 28 est une poulie à friction montée sur l'axe de rotation 22 de la bobine 21 de façon à communiquer à cette dernière une vitesse de rotation variable fonction de sa résistance à l'entraînement en rotation.

Le système de commande comporte enfin en quatrième lieu, une courroie de transmission 29 reliant la première poulie à gorge 23 et la poulie à friction 28. Cette courroie 29 communique à la poulie de commande 28 une vitesse de rotation déterminée, fonction de celle de la première poulie à gorge 23 et des diamètres respectifs des poulies entraînées par la courroie 29.

Le boîtier 30 comporte un capteur de force 31, également lié au châssis 20. Ce capteur de force effectue une mesure par cisaillement et permet de mesurer la tension du fil 7.

Le boîtier 30 comporte également un dispositif d'amortissement constitué de deux manchons en caoutchouc 32 situés aux deux extrémités de l'axe de pivotement 25 entre ce dernier et le boîtier 30.

Le boîtier 30 comporte en outre un galet presseur 33 situé à proximité de la seconde poulie à gorge 26. Ce galet presseur 33 a son axe situé légèrement au-dessus de ceux des deux poulies à gorge 23 et 26, de façon à venir en contact avec la partie du fil 7 qui quitte la seconde poulie à gorge 26 en direction de la maquette 2. Cette partie de fil quitte la seconde poulie à gorge 26 et donc le boîtier 30 par une ouverture 34 pratiquée dans ce dernier.

Le fonctionnement de ce dispositif de positionnement et du principe de mesure de la surface équivalente radar va être décrit ci-après. Dans un premier temps, la maquette est amenée depuis le sol dans la position de mesure, c'est-à-dire ici à environ 6 mètres de hauteur. Cette opération s'effectue en rembobinant les fils supérieurs 6 à l'aide des moyens de tension 8 et en débobinant les fils inférieurs 7 à l'aide des autres moyens de tension 8. La tension dans les fils inférieurs et supérieurs est toujours positive. En effet, le système de commande des moyens de tension est tel que, dans une phase de bobinage, la vitesse de rotation de la bobine de réserve 21 est toujours légèrement supérieure à la vitesse de rotation de la première poulie à gorge 23 et de la deuxième poulie à gorge 26. Ceci est obtenu par la transmission par la courroie 29 et par une valeur prédéterminée de la friction appliquée sur l'axe 22 de la bobine 21. De même, dans la phase de débobinage, les fils sont également toujours tendus car, à ce moment là, la vitesse de rotation de la bobine 21 est légèrement inférieure à celle de la première et de la deuxième poulie à gorge, effet toujours obtenu par la courroie de transmission 29 et par une friction d'une valeur différente appliquée sur l'axe 22. La tension dans les fils est mesurée par le capteur de force 31 qui travaille en cisaillement entre le châssis 20 et le boîtier 30.

Lorsque la maquette est en position de mesure, on fait varier alors l'attitude de cette dernière par rapport à l'axe d'illumination I-I' en agissant sur les tensions des différents fils. Dans cette phase de mesure, les fils supérieurs et inférieurs sont toujours en tension, comme indiqué ci-dessus. La position des supports supérieur 3 et inférieur 4 dépend de la valeur de l'angle C au cours de la mesure. La variation de l'attitude se fait continuement en gisement, sur une plage possible de 360°; on peut également faire varier le tangage entre ±30° environ.

On pourrait également faire varier l'attitude de la maquette 2 en déplaçant angulairement le support supérieur 3 par rapport au support inférieur 4 mais ceci impliquerait alors des longueurs différentes de fil, ce qui est nettement moins avantageux.

Il est à noter qu'à l'arrêt des moteurs pas à pas 24 des moyens de tension 8, du fait du caractère irréversible de la rotation des premières poulies à gorge 23, la faible tension dans les fils, due à la friction des poulies à friction 28, suffit à maintenir la maquette 2 en place.

Lorsque la maquette est en position de mesure, celle-ci est sujette à des mouvements pendulaires, c'est-à-dire des mouvements de faible amplitude par rapport aux amplitudes possibles, suivant certains degrés de liberté de la maquette. Ces mouvements, pour être inhérents à ce type de montage, n'en constituent pas moins des suroscillations parasites qu'il convient de limiter d'abord, et de pouvoir mesurer ensuite, si l'on veut attribuer à chaque mesure électromagnétique la précision précise de la maquette sous test.

Il s'agit donc de mesurer au cours du mouvement tous les écarts que présente la maquette sous test par rapport à sa position nominale donnée par la géométrie du dispositif de positionnement.

On place la maquette dans une position de mesure déterminée et l'on effectue dans cette position des mesures à chaque fois que des trains d'impulsions sont émis, c'est-à-dire toutes les 100 millisecondes environ. Les moyens de traitement 15 ont besoin de 50 millisecondes pour effectuer la mesure proprement dite et de 50 millisecondes supplémentaires pour se vider numériquement et faire un prétraitement au niveau des informations et être prêts à faire la mesure suivante.

Le signal vidéo composite issu des caméras est amplifié et numérisé sur 8 bits par exemple. Le signal numérique obtenu est alors filtré pour affranchir le traitement de la composante continue de l'image, et comparé ensuite à un seuil recalculé à chaque image qui dépend notamment d'une valeur moyenne des contrastes entre le repère et le fond de l'image, ayant eu cours antérieurement.

Le seuillage permet d'obtenir un signal binaire, ce qui se traduit en vidéo sur le moniteur de visualisation par un repère blanc sur fond noir ou l'inverse.

La visualisation des différentes étapes du traitement est rendue possible par la mémorisation des signaux; cela permet également de s'affranchir de la commutation des caméras.

A ce niveau, une carte de calcul du calculateur central réalise les traitements voulus à partir des données binaires de l'image. On pourra calculer le déplacement d'un point d'une image à l'autre, ou par rapport à une référence qui peut être celle de la position de repos, et en déduire le déplacement du vecteur formé par les deux points visés chacun par une caméra.

L'information finale est enfin envoyée au calculateur, suivant une récurrence fixe ou un signal externe de synchronisation.

Si les mesures de SER sont effectuées à grande cadence, les mesures de position et d'attitude sont plus espacées. On effectue alors une interpolation entre les différentes positions et attitudes mesurées afin d'éviter un trop grand nombre de mesures.

## Revendications

1. Dispositif de positionnement (1) d'une maquette (2) en vue de mesures de rétrodiffusion, en particulier en hyperfréquences, comprenant des moyens de support propres à tenir la maquette dans une position commandée, variable au moins en attitude, par rapport à un axe d'illumination (I-I') en principe horizontal, caractérisé en ce que ces moyens de support comprennent :

a)- un support supérieur (3) et un support inférieur (4) mobiles indépendamment dans deux plans fixes espacés respectifs, en rotation commandée, autour d'un même axe sensiblement vertical (5), passant sensiblement au milieu de chacun de ces supports,

b)- deux paires de fils supérieurs (6) dont un bout est lié à demeure à la maquette dans une zone de liaison de la partie supérieure de la maquette (2),

c)- deux paires de fils inférieurs (7) dont un bout est lié à demeure à la maquette dans une zone de liaison de la partie inférieure de la maquette (2),

- ces deux paires de fils supérieurs (6) étant montés, à leur autre bout, sur des moyens de tension (8) respectivement fixés aux deux extrémités du support supérieur (3) et destinés à régler la tension et la longueur des fils en fonction d'une attitude désirée et/ou d'une altitude désirée pour la maquette,

- ces deux paires de fils inférieurs (7) étant montés, à leur autre bout, sur des moyens de tension (8) respectivement fixés aux deux extrémités du support inférieur (4) et destinés à régler la tension et la longueur des fils en fonction d'une attitude désirée et/ou d'une altitude désirée pour la maquette,

d)- des moyens de commande (9) de la position angulaire des deux supports (3,4) fonction d'une altitude désirée et/ou d'une attitude désirée pour la maquette.

2. Dispositif selon la revendication 1, caractérisé en ce que les moyens de commande (9) et les moyens de tension (8) sont agencés de sorte que l'angle de chacun des fils avec la direction d'illumination (I-I') demeure inférieur à un seuil choisi plus petit que 90°.

3. Dispositif selon la revendication 2, caractérisé en ce que le seuil est d'environ 60°.

4. Dispositif selon l'une des revendications 1 à 3, caractérisé en ce que l'angle de chacun des fils avec la verticale est d'environ 45°.

5. Dispositif selon l'une des revendications 1 à 4, caractérisé en ce que les zones de liaison sont situées sensiblement dans un même plan vertical passant par le centre de gravité de la maquette.

6. Dispositif selon la revendication 5, caractérisé en ce que les zones de liaison comprennent de fins alésages et en ce que les bouts des fils supérieurs (respectivement inférieurs), liés à la maquette, pénètrent par ces fins alésages dans la partie supérieure (respectivement inférieure) de la maquette et sont fixés à demeure à l'intérieur de celle-ci.

7. Dispositif selon l'une des revendications 1 à 6, caractérisé en ce que les fils sont réalisés en une matière de raideur élevée, en particulier une fibre polyamide aromatique telle que le Kevlar (marque déposée).

8. Dispositif selon l'une des revendications 1 à 7, caractérisé en ce que le support supérieur (3) est constitué de deux paires de bras supérieurs situées de part et d'autre des moyens de commande (9) et en ce que le support inférieur (4) est constitué de deux paires de bras inférieurs situées de part et d'autre des moyens de commande (9).

9. Dispositif selon l'une des revendications 1 à 8, caractérisé en ce que les moyens de tension (8) d'un fil sont constitués, d'une part, de moyens de réserve dudit fil, d'autre part, d'un système de commande de ces moyens de réserve permettant, d'une part, de régler la longueur du fil en fonction de la position commandée de la maquette, d'autre part, d'assurer toujours une tension dans le fil.

10. Dispositif selon la revendication 9, caractérisé en ce que les moyens de réserve et le système de commande sont montés sur un châssis (20) fixé de façon amovible à l'extrémité de chaque support supérieur et inférieur, en ce que les moyens de réserve sont constitués d'une bobine solidaire (21) d'un axe de rotation (22) lié au châssis (20), autour de laquelle est bobiné le fil et située dans une zone proche de l'extrémité du châssis la plus proche de l'axe vertical (5) de rotation du support correspondant, en ce que le système de commande est constitué, en premier lieu, d'une première poulie à gorge (23), commandée en rotation par un moteur pas à pas (24) autour d'un axe de pivotement (25) lié au châssis (20) et montée dans un boîtier (30) susceptible de pivoter autour dudit axe de pivotement (25), en deuxième lieu, d'une seconde poulie à gorge (26), liée au boîtier (30) du côté de l'axe de pivotement (25) le plus éloigné de la bobine (21), commandée en rotation par la première poulie à gorge (23), de sorte que sa rotation soit égale en valeur mais opposée en sens à celui de la première poulie à gorge (23), ledit fil quittant la bobine (21) et étant enroulé successivement sur la première (23) puis la seconde poulie à gorge (26) de façon à former des huit, avant de quitter le boîtier (30) par une ouverture (34), en troisième lieu, d'une poulie de commande (28) de la bobine (21) montée sur l'axe de rotation (22) de la bobine (21) de façon à communiquer à cette dernière une vitesse de rotation variable, en quatrième lieu, une courroie de transmission (29) reliant la première poulie à gorge (23) et la poulie de commande (28) et communiquant à la poulie de commande (28) une vitesse de rotation déterminée.

11. Dispositif selon la revendication 10, caractérisé en ce que la poulie de commande est une poulie à friction (28).

12. Dispositif selon l'une des revendications 9 à 11, caractérisé en ce que le boîtier (30) est muni d'un capteur de force (3), notamment à mesure par cisaillement, également lié au châssis (20) et permettant de mesurer la tension du fil, et en ce que le boîtier (30) est muni d'un dispositif d'amortissement (32), notamment des manchons en caoutchouc, situé sur l'axe de pivotement (25).

13. Dispositif selon l'une des revendications 9 à 12, caractérisé en ce que le système de commande comporte en outre un galet presseur (33) situé dans le boîtier (30) à proximité de la seconde poulie à gorge (26), de façon à venir en contact avec la partie du fil qui quitte la seconde poulie à gorge (26) en direction de la maquette (2).

14. Dispositif selon l'une des revendications précédentes, caractérisé en ce que sont en outre prévues deux caméras (14), solidaires de l'un des supports, et orientées vers la maquette (2), ainsi que des moyens de traitement (15) reliés à ces caméras, pour mesurer le décalage en gisement de la maquette et son déport par rapport à sa position de repos.

15. Dispositif selon la revendication 14, caractérisé en ce qu'il comporte aussi au moins une autre caméra (17), fixe, visant la maquette dans un plan équatorial, permettant aux moyens de traitement (15) de mesurer au moins le tangage de celle-ci.

16. Dispositif selon l'une des revendications 14 et 15, caractérisé en ce que les moyens de traitement (15) réalisent une interpolation sur la position et l'attitude de la maquette.


**Patentansprüche**

1. Positioniervorrichtung (1) für ein Modell (2) im Hinblick auf die Messung der Retrodiffusion insbesondere von Höchstfrequenzen, enthaltend Halteeinrichtungen, die dazu bestimmt sind, das Modell in einer vorbestimmten Position zu halten, die wenigstens im Winkel gegenüber einer im wesentlichen horizontalen Beleuchtungsachse (I-I') variabel ist, dadurch gekennzeichnet, daß die Halteeinrichtungen aufweisen:

a) einen oberen Halter (3) und einen unteren Halter (4), die unabhängig in zwei festen, voneinander beabstandeten Ebenen in gesteuerter Drehung um eine Achse (5) beweglich sind, die im wesentlichen vertikal verläuft und im wesentlichen durch die Mitte jedes dieser Halter läuft,

b) zwei Paare oberer Drähte (6), von denen ein Ende fest mit dem Modell in einer Verbindungszone des oberen Teils des Modells (2) verbunden ist,

c) zwei Paare unterer Drähte (7), von denen ein Ende fest mit dem Modell in einer Verbindungszone des unteren Teils des Modells (2) verbunden ist,

wobei diese zwei Paare oberer Drähte (6) an ihrem anderen Ende an Spanneinrichtungen (8) befestigt sind, die ihrerseits an den zwei Enden des oberen Trägers (3) befestigt sind und dazu dienen, die Spannung und die Länge der Drähte in Abhängigkeit von einer gewünschten Winkelstellung und/oder einer gewünschten Höhe des Modells einzustellen,

wobei diese zwei Paare unterer Drähte (7) an ihrem anderen Ende an Spanneinrichtungen (8) befestigt sind, die ihrerseits an zwei Enden des unteren Trägers (4) befestigt sind und dazu dienen, die Spannung und die Länge der Drähte in Abhängigkeit von einer gewünschten Winkelstellung und/oder einer gewünschten Höhe des Modells einzustellen,

d) Steuereinrichtungen (9) für die Winkelstellung der zwei Träger (3, 4) in Abhängigkeit von einer gewünschten Höhe und/oder einer gewünschten Winkelstellung des Modells.

2. Vorrichtung nach Anspruch 1, dadurch gekennzeichnet, daß die Steuereinrichtugen (9) und die Spanneinrichtungen (8) derart ausgebildet sind, daß der Winkel zwischen jedem der Drähte und der Beleuchtungsrichtung (I-I') kleiner als ein Grenzwert bleibt, der mit weniger als 99° gewählt ist.

3. Vorrichtung nach Anspruch 2, dadurch gekennzeichnet, daß der Grenzwert bei etwa 60° liegt.

4. Vorrichtung nach einem der Ansprüche 1 bis 3, dadurch gekennzeichnet, daß der Winkel zwischen jedem der Drähte und der Vertikalen ungefähr 45° beträgt.

5. Vorrichtung nach einem der Ansprüche 1 bis 4, dadurch gekennzeichnet, daß die Verbindungszonen im wesentlichen in einer gleichen Vertikalebene liegen, die durch den Schwerpunkt des Modell läuft.

6. Vorrichtung nach Anspruch 5, dadurch gekennzeichnet, daß die Verbindungszonen feine Bohrungen aufweisen und daß die Enden der oberen Drähte ( bzw. der unteren Drähte), die mit dem Modell verbunden sind, in diese feinen Bohrungen im oberen (bzw. unteren) Teil des Modells eindringen und fest im Innern desselben angebracht sind.

7. Vorrichtung nach einem der Ansprüche 1 bis 6, dadurch gekennzeichnet, daß die Drähte aus einem Material erhöhter Steifigkeit, insbesondere aus einer aromatischen Polyamidfaser, wie bei beispielsweise Kevlar (eingetragenes Warenzeichen), bestehen.

8. Vorrichtung nach einem der Ansprüche 1 bis 7, dadurch gekennzeichnet, daß der obere Träger (3) aus zwei Paaren oberer Arme besteht, die beiderseits der Steuereinrichtungen (9) gelegen sind und daß der untere Träger (4) aus zwei Paaren unterer Arme besteht, die beiderseits der Steuereinrichtungen (9) gelegen sind.

9. Vorrichtung nach einem der Ansprüche 1 bis 8, dadurch gekennzeichnet, daß die Spanneinrichtungen (8) eines Drahtes einerseits aus Vorratseinrichtungen des genannten Drahtes und andererseits aus einem Steuersystem für diese Vorratseinrichtungen bestehen, die es einerseits erlauben, die Länge des Drahtes in Abhängigkeit von der vorbestimmten Position des Modells einzustellen und andererseits stets eine Spannung in dem Draht sicherzustellen.

10. Vorrichtung nach Anspruch 9, dadurch gekennzeichnet, daß die Vorratseinrichtungen und das Steuersystem an einem Chaissis (20) montiert sind, das beweglich am Ende jedes oberen und unteren Trägers befestigt ist, daß die Vorratseinrichtungen von einer Spule (21) gebildet sind, die fest mit einer Drehachse (22) verbunden ist, die in dem Chassis (20) gelagert ist, wobei der Draht um die Spule gewickelt ist und diese in einer Zone nahe dem Ende des Chassis gelegen ist, das der vertikalen Drehachse (5) des zugehörigen Trägers am nächsten ist, daß das Steuersystem im wesentlichen aus einer ersten Rillenscheibe (23) besteht, die von einem Schrittmotor (24) um eine im Chassis gelagerte Schwenkachse (25) drehbar ist und in einem Behälter (30) gelagert ist, der um die genannte Schwenkachse (25) schwenken kann, und weiterhin aus einer zweiten Rillenscheibe (26) besteht, die mit dem Behälter (30) auf der Seite bezüglich der Schwenkachse (25) verbunden ist, die der Spule (21) am weitesten entfernt liegt und die durch die erste Rillenscheibe (23) derart gedreht wird, daß ihre Drehung gleiche Größe, jedoch entgegengesetzten Drehsinn zu dem der ersten Rillenscheibe (23) hat, wobei der Draht, der die Spule (21) verläßt, aufeinanderfolgend um die erste (23) und die zweite Rillenscheibe (26) achterförmig gewunden ist, bevor er den Behälter (30) durch eine Öffnung (34) verläßt, und weiterhin aus einer Steuerscheibe (28) für die Spule (21) besteht, die auf der Drehachse (22) der Spule (21) montiert ist, um dieser eine variable Drehgeschwindigkeit zu verleihen, und schließlich aus einem Transmissionsriemen (29) besteht, der die erste Rillenscheibe (23) und die Steuerscheibe (28) verbindet und der Steuerscheibe (28) eine vorbestimmte Drehgeschwindigkeit vermittelt.

11. Vorrichtung nach Anspruch 10, dadurch gekennzeichnet, daß die Steuerscheibe eine Reibscheibe (28) ist.

12. Vorrichtung nach einem der Ansprüche 9 bis 11, dadurch gekennzeichnet, daß der Behälter (30) mit einem Kraftmesser (3) versehen ist, insbesondere zur Schwerkraftmessung, der ebenfalls mit dem Chassis (20) verbunden ist und es erlaubt, die Drahtspannung zu messen, daß der Behälter (30) mit einer Dämpfungseinrichtung (32), insbesondere aus Gummimuffen versehen ist, die auf der Schwenkachse (25) angeordnet ist.

13. Vorrichtung nach einem der Ansprüche 9 bis 12, dadurch gekennzeichnet, daß das Steuersystem weiterhin eine Druckwalze (33) aufweist, die in dem Behälter (30) nahe der zweiten Rillenscheibe (26) derart angeordnet ist, daß sie mit dem Abschnitt des Drahtes in Berührung gelangt, der die zweite Rillenscheibe (26) in Richtung auf das Modell (2) verläßt.

14. Vorrichtung nach einem der vorhergehenden Ansprüche, dadurch gekennzeichnet, daß weiterhin zwei Kameras (14) vorgesehen sind, die mit einem der Träger fest verbunden sind und gegen das Modell (2) gerichtet sind, sowie mit Verarbeitungseinrichtungen (15), die mit den Kameras verbunden sind, um die Winkelabweichung des Modell und seine Abweichung gegenüber seiner Ruhelage zu messen.

15. Vorrichtung nach Anspruch 14, dadurch gekennzeichnet, daß sie auch eine weitere, feste Kamera (17) aufweist, die das Modell in einer Äquatorialebene anpeilt und es den Verarbeitungseinrichtungen (15) erlaubt, wenigstens das Nicken desselben zu messen.

16. Vorrichtung nach einem der Ansprüche 14 und 15, dadurch gekennzeichnet, daß die Verarbeitungseinrichtungen (15) eine Interpolation bezüglich der Position und der Winkelstellung des Modells ausführen.

## Claims

1. Device (1) for positioning a model (2) with a view to measuring retrodiffusion, in particular at microwave frequencies, comprising support means for holding the model in a controlled position, which is variable at least in attitude, relative to an axis of illumination (I-I'), which is in principle horizontal, characterised in that the support means comprise:

a) an upper support (3) and a lower support (4), which are movable independently in two fixed planes spaced apart from one another, in controlled rotation, about a common, substantially vertical axis (5), which passes substantially through the centre of each support,

b) two pairs of upper wires (6), one end of which is connected permanently to the model in a connecting zone of the upper part of the model (2),

c) two pairs of lower wires (7), one end of which is connected permanently to the model in a connecting zone of the lower part of the model (2),

- these two pairs of upper wires (6) being mounted at their other end on tension means (8) respectively fixed at both ends of the upper support (3) and intended to control the tension and length of the wires as a function of a desired attitude and/or of a desired altitude for the model,

- the two pairs of lower wires (7) being mounted at their other end on tension means (8) respectively fixed at both ends of the lower support (4) and intended to control the tension and length of the wires as a function of a desired attitude and/or of a desired altitude for the model,
d) means (9) for controlling the angular position of the two supports (3, 4) as a function of a desired altitude and/or of a desired attitude for the model.

2. Device according to claim 1, characterised in that the control means (9) and the tension means (8) are so arranged that the angle of each of the wires to the direction of illumination (I-I') remains lower than a chosen threshold which is less than 90°.

3. Device according to claim 2, characterised in that the threshold is approximately 60°.

4. Device according to one of claims 1 to 3, characterised in that the angle of each of the wires to the vertical is approximately 45°.

5. Device according to one of claims 1 to 4, characterised in that the connecting zones are located substantially in a common vertical plane passing through the centre of gravity of the model.

6. Device according to claim 5, characterised in that the connecting zones comprise fine bores and the ends of the upper wires (respectively lower wires) connected to the model penetrate these fine bores in the upper part (respectively lower part) of the model and are permanently fixed to the interior of the model.

7. Device according to one of claims 1 to 6, characterised in that the wires consist of a material with a high level of rigidity, in particular an aromatic polyamide such as Kevlar (registered Trade Mark).

8. Device according to one of claims 1 to 7, characterised in that the upper support (3) is formed of two pairs of upper arms located on either side of the control means (9) and in that the lower support (4) is formed of two pairs of lower arms located on either side of the control means (9).

9. Device according to one of claims 1 to 8, characterised in that the tension means (8) of one wire are formed, on the one hand, of storage means for said wire, and on the other hand of a control system for these storage means, in which case this control system makes it possible on the one hand to adjust the length of the wire as a function of the controlled position of the model, and on the other hand always to ensure tension in the wire.

10. Device according to claim 9, characterised in that the storage means and the control system are mounted on a framework (20) fixed immovably at the end of each upper and lower support, in that the storage means are formed of a spool (21) rigidly connected to a rotary shaft (22) connected to the framework (20), about which the wire is wound and which is located in a region close to the end of the framework closest to the vertical axis (5) of rotation of the corresponding support, in that the control system is formed, firstly, of a first grooved pulley (23), which is caused to rotate by a stepper motor (24) about a pivotal shaft (25) connected to the framework (20) and mounted in a casing (30) capable of pivoting about said pivotal shaft (25), secondly of a second grooved pulley (26) connected to the casing (30) on the side of the pivotal shaft (25) furthest from the spool (21), made to rotate by the first grooved pulley (23), so that its rotation is equal in value, but in the opposite direction, to that of the first grooved pulley (23), the wire leaving the spool (21) and being wound successively on to the first (23) and then the second grooved pulley (26) so as to form figures of eight, before leaving the casing (30) by an aperture (34), thirdly of a control pulley (28) of the spool (21) mounted on the rotary shaft (22) of the spool (21) so as to impart thereto a variable speed of rotation, and fourthly of a transmission belt (29) connecting the first grooved pulley (23) and the control pulley (28) together and imparting to the control pulley (28) a specified speed of rotation.

11. Device according to claim 10, characterised in that the control pulley is a friction pulley (28).

12. Device according to one of claims 9 to 11, characterised in that the casing (30) is equipped with a force meter (3), in particular measuring by shearing, also connected to the framework (20) and permitting measurement of the tension of the wire, and in that the casing (30) is equipped with a damping device (32), in particular rubber sleeves, located on the pivotal shaft (25).

13. Device according to one of claims 9 to 12, characterised in that the control system also comprises a capstan idler (33) located in the casing (30) near the second grooved pulley (26), so as to come into contact with the part of the wire leaving the second grooved pulley (26) in the direction of the model (2).

14. Device according to one of the preceding claims, characterised in that two cameras (14) are also provided, which are rigidly connected to one of the supports and are oriented towards the model (2), as well as processing means (15) connected to the cameras for measuring the difference in bearing of the model and its offset relative to its resting position.

15. Device according to claim 14, characterised in that it also comprises at least one further camera (17), which is fixed and is oriented towards the model in an equatorial plane, permitting the processing means (15) to measure at least the pitching of the latter.

16. Device according to either of claims 14 and 15, characterised in that the processing means (15) carry out an interpolation on the position and the attitude of the model.

FIG.1

FIG.2

FIG.3

FIG.4

EP 0 301 941 B1

FIG.5

FIG.8

# FIG. 6

EP 0 301 941 B1

FIG.7